# EUROPEAN PATENT APPLICATION

(11) **EP 4 257 924 A1**
(43) Date of publication of application: **11.10.2023**
(21) Application number: 23166568.8
(22) Date of filing: 04.04.2023
(51) Int. Cl.: G01C 15/00

(54) **LASER SCANNER FOR VERIFYING POSITIONING OF COMPONENTS OF ASSEMBLIES**

(30) Priority: 08.04.2022 US 202263329058 P
(71) Applicant: Faro Technologies, Inc., Lake Mary, FL 32746-6204 (US)
(72) Inventor: CHAN, John, Westmount, H3Z 1T3 (CA); HAEDICKE, Udo, 70825 Korntal-Münchingen (DE); DUBÉ-DALLAIRE, Mathieu, Westmount, H3Z 1T3 (CA); BÉDARD, Renaud Gaboriault, Westmount, H3Z 1T3 (CA)
(74) Representative: McNamara, Kathryn

(57) **Abstract**

Examples described herein provide a method that includes receiving a model corresponding to an assembly. The method further includes defining an object of interest in the model. The method further includes receiving a point cloud generated based on data obtained by scanning the assembly using a laser scanner. The method further includes aligning the point cloud to the model. The method further includes determining whether a component corresponding to the object of interest is located correctly relative to the assembly based at least in part on the point cloud aligned to the model. The method further includes, responsive to determining that the component is not located correctly, taking a corrective action.

## Description

### CROSS-REFERENCE TO RELATED APPLICATIONS

The present application claims the benefit of, and priority to, United States Provisional Application Serial No. 63/329,058 filed on April 8, 2022, the contents of which are incorporated herein by reference.

### BACKGROUND

The subject matter disclosed herein relates to use of devices for capturing three-dimensional (3D) data of objects and/or environments. An example of such a device is a 3D laser scanner time-of-flight (TOF) coordinate measurement device. A 3D laser scanner of this type steers a beam of light to a non-cooperative target such as a diffusely scattering surface of an object. A distance meter in the device measures a distance to the object, and angular encoders measure the angles of rotation of two axles in the device. The measured distance and two angles enable a processor in the device to determine the 3D coordinates of the target. Another example of a device for capturing 3D data of objects and/or environments is a processing system (e.g., a smartphone, a tablet computing device, and/or the like) having a lidar sensor. Another example of such a device is capable of capturing images and performing photogrammetry techniques.

A TOF laser scanner is a scanner in which the distance to a target point is determined based on the speed of light in air between the scanner and a target point. Laser scanners are typically used for scanning closed or open spaces such as interior areas of buildings, industrial installations, and tunnels. They may be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., an azimuth and a zenith angle), and optionally a gray-scale value. This raw scan data is collected, stored and sent to a processor or processors to generate a 3D image representing the scanned area or object.

Generating an image requires at least three values for each data point. These three values may include the distance and two angles, or may be transformed values, such as the x, y, z coordinates. In an embodiment, an image is also based on a fourth gray-scale value, which is a value related to irradiance of scattered light returning to the scanner.

Most TOF scanners direct the beam of light within the measurement volume by steering the light with a beam steering mechanism. The beam steering mechanism includes a first motor that steers the beam of light about a first axis by a first angle that is measured by a first angular encoder (or another angle transducer). The beam steering mechanism also includes a second motor that steers the beam of light about a second axis by a second angle that is measured by a second angular encoder (or another angle transducer).

Many contemporary laser scanners include a camera mounted on the laser scanner for gathering camera digital images of the environment and for presenting the camera digital images to an operator of the laser scanner. By viewing the camera images, the operator of the scanner can determine the field of view of the measured volume and adjust settings on the laser scanner to measure over a larger or smaller region of space. In addition, the camera digital images may be transmitted to a processor to add color to the scanner image. To generate a color scanner image, at least three positional coordinates (such as x, y, z) and three color values (such as red, green, blue "RGB") are collected for each data point.

One application where 3D scanners are used is to evaluate assemblies, construction sites (e.g., buildings), and the like to determine whether a component of an assembly, building, etc., is installed correctly.

Accordingly, while existing 3D scanners are suitable for their intended purposes, what is needed is a 3D scanner having certain features of embodiments of the present invention.

### BRIEF DESCRIPTION

In one embodiment, a method is provided. The method includes receiving a model corresponding to an assembly. The method further includes defining an object of interest in the model. The method further includes receiving a point cloud generated based on data obtained by scanning the assembly using a laser scanner. The method further includes aligning the point cloud to the model. The method further includes determining whether a component corresponding to the object of interest is located correctly relative to the assembly based at least in part on the point cloud aligned to the model. The method further includes, responsive to determining that the component is not located correctly, taking a corrective action.

In addition to one or more of the features described herein, or as an alternative, further embodiments of the method may include that determining whether the component corresponding to the object of interest is located correctly relative to the assembly includes determining whether the component is present in the assembly.

In addition to one or more of the features described herein, or as an alternative, further embodiments of the method may include, responsive to determining that the component is present in the assembly, determining whether the component is at a correct location of the assembly.

In addition to one or more of the features described herein, or as an alternative, further embodiments of the method may include generating a graphical representation of the model.

In addition to one or more of the features described herein, or as an alternative, further embodiments of the method may include that the graphical representation includes an indicium indicating positioning information for the object of interest relative to the assembly.

In addition to one or more of the features described herein, or as an alternative, further embodiments of the method may include that the indicium indicates whether the component is present in the assembly.

In addition to one or more of the features described herein, or as an alternative, further embodiments of the method may include that the indicium indicates whether the component is at a correct location of the assembly.

In addition to one or more of the features described herein, or as an alternative, further embodiments of the method may include that determining whether the component is located correctly relative to the assembly includes comparing a distance to a threshold, the distance being the distance between a point of the point cloud associated with the component and a known location of a point of the model corresponding to the assembly.

In addition to one or more of the features described herein, or as an alternative, further embodiments of the method may include that the threshold is adjustable.

In addition to one or more of the features described herein, or as an alternative, further embodiments of the method may include that the model is a computer aided design model.

In addition to one or more of the features described herein, or as an alternative, further embodiments of the method may include that the model is a building information modeling (BIM) model.

In addition to one or more of the features described herein, or as an alternative, further embodiments of the method may include extracting feature points from the scan data to generate a feature point database.

In addition to one or more of the features described herein, or as an alternative, further embodiments of the method may include performing a localization of an augmented reality device using the feature point database.

In another embodiment, a system is provided. The system includes a laser scanner to perform at least one scan and generate a data set that includes a plurality of three-dimensional coordinates. The system further includes a processing system that includes a memory having computer readable instructions and a processing device for executing the computer readable instructions. The computer readable instructions control the processing device to perform operations that include receiving a model corresponding to an assembly. The operations further include defining an object of interest in the model. The operations further include receiving a point cloud generated based on data obtained by scanning the assembly using the laser scanner. The operations further include aligning the point cloud to the model. The operations further include determining whether a component corresponding to the object of interest is located correctly relative to the assembly based at least in part on the point cloud aligned to the model. The operations further include, responsive to determining that the component is not located correctly, taking a corrective action.

In addition to one or more of the features described herein, or as an alternative, further embodiments of the system may include that determining whether the component corresponding to the object of interest is located correctly relative to the assembly includes determining whether the component is present in the assembly.

In addition to one or more of the features described herein, or as an alternative, further embodiments of the system may include that the instructions further include, responsive to determining that the component is present in the assembly, determining whether the component is at a correct location of the assembly.

In addition to one or more of the features described herein, or as an alternative, further embodiments of the system may include that the operations further include generating a graphical representation of the model.

In addition to one or more of the features described herein, or as an alternative, further embodiments of the system may include that the graphical representation includes an indicium indicating positioning information for the object of interest relative to the assembly.

In addition to one or more of the features described herein, or as an alternative, further embodiments of the system may include that the indicium indicates whether the component is present in the assembly.

In addition to one or more of the features described herein, or as an alternative, further embodiments of the system may include that the indicium indicates whether the component is at a correct location of the assembly.

In addition to one or more of the features described herein, or as an alternative, further embodiments of the system may include that determining whether the component is located correctly relative to the assembly includes comparing a distance to a threshold, the distance being the distance between a point of the point cloud associated with the component and a known location of a point of the model corresponding to the assembly.

In addition to one or more of the features described herein, or as an alternative, further embodiments of the system may include that the threshold is adjustable.

In addition to one or more of the features described herein, or as an alternative, further embodiments of the system may include that the model is a computer aided design model.

In addition to one or more of the features described herein, or as an alternative, further embodiments of the system may include that the model is a building information modeling (BIM) model.

In addition to one or more of the features described herein, or as an alternative, further embodiments of the system may include that the operations further include extracting feature points from the scan data to generate a feature point database.

In addition to one or more of the features described herein, or as an alternative, further embodiments of the system may include that the operations further include performing a localization of an augmented reality device using the feature point database.

In addition to one or more of the features described herein, or as an alternative, further embodiments of the system may include that the laser scanner includes: a second processing system including a scanner controller; a housing; and a three-dimensional (3D) scanner disposed within the housing and operably coupled to the second processing system, the 3D scanner having a light source, a beam steering unit, a first angle measuring device, a second angle measuring device, and a light receiver, the beam steering unit cooperating with the light source and the light receiver to define a scan area, the light source and the light receiver configured to cooperate with the second processing system to determine a first distance to a first object point based at least in part on a transmitting of a light by the light source and a receiving of a reflected light by the light receiver, the 3D scanner configured to cooperate with the second processing system to determine 3D coordinates of the first object point based at least in part on the first distance, a first angle of rotation and a second angle of rotation.

The above features and advantages, and other features and advantages, of the disclosure are readily apparent from the following detailed description when taken in connection with the accompanying drawings.

### BRIEF DESCRIPTION OF DRAWINGS

The patent or application file contains at least one drawing executed in color. Copies of this patent or patent application publication with color drawing(s) will be provided by the Office upon request and payment of the necessary fee.

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a laser scanner according to one or more embodiments described herein;
FIG. 2 is a side view of the laser scanner illustrating a method of measurement according to one or more embodiments described herein;
FIG. 3 is a schematic illustration of the optical, mechanical, and electrical components of the laser scanner according to one or more embodiments described herein;
FIG. 4 is a schematic illustration of the laser scanner of FIG. 1 according to one or more embodiments described herein;
FIG. 5 is a schematic illustration of a processing system for verifying positioning of components of assemblies according to one or more embodiments described herein;
FIG. 6 is a flow diagram of a method for verifying positioning of components of assemblies according to one or more embodiments described herein;
FIG. 7A is a flow diagram of a method for verifying positioning of components of assemblies according to one or more embodiments described herein;
FIG. 7B depicts a flow diagram of a method for performing initialization and tracking according to one or more embodiments described herein;
FIG. 8 is a graphical representation of an assembly according to one or more embodiments described herein;
FIG. 9 is a flow diagram of a method for verifying positioning of components of assemblies according to one or more embodiments described herein;
FIG. 10 is a photograph of an example assembly according to one or more embodiments described herein;
FIG. 11 is a graphical representation of the assembly of FIG. 10 according to one or more embodiments described herein; and
FIG. 12 is a schematic illustration of a processing system for implementing the presently described techniques according to one or more embodiments described herein.
The detailed description explains embodiments of the disclosure, together with advantages and features, by way of example with reference to the drawings.

### DETAILED DESCRIPTION

Embodiments described herein provide for verifying positioning of components of assemblies. Positioning verification can be performed by comparing a point cloud to a model (e.g., a computer aided design (CAD) model, a building information modeling (BIM) model, etc.). Positioning verification can include detecting the absence or presence of a particular component and/or whether the component is located correctly or incorrectly (i.e. a "mislocation"). As used herein, the term "absence" refers to a component that expected to be on/in the assembly but is missing; the term "presence" refers to a component that is expected to be on/in the assembly and is determined to be properly located; the term "mislocated" refers to a component that is expected to be on/in the assembly but is determined not to be properly located. The term "assembly" refers to multiple individual components that are combined. For example, an assembly can be a collection of individual objects combined to create a larger object (the assembly). Examples of assemblies include, but are not limited to, beams used to form the structure of a building, support members used to construct a bridge, parts used to form a vehicle or a portion of a vehicle, and the like.

Conventional techniques for positioning verification (e.g., absence, presence, and/or mislocation determination) are user-dependent, manual processes. For example, a point cloud is captured of general surfaces only, and surface are colored relative to distances of points of the point cloud to the model, with a user then needing to interpret the analysis results to verify positioning. This process is time-consuming and error prone.

One or more embodiments described herein provide for performing assembly verification (e.g., in a large point cloud) and reporting them in a component or sub-assembly level instead of a surfaces or feature level. For example, one or more embodiments provided herein provide for positioning verification of components of assemblies, which can include determining absence, presence, and/or mislocation of the components of assemblies. To do this, a point cloud is obtained, such as by a 3D laser scanner time-of-flight (TOF) coordinate measurement device (referred to simply as a "laser scanner") and/or any other suitable device (e.g., a smartphone having LIDAR capabilities, a mobile scanner, a device capable of capturing images and performing photogrammetry using the images, and/or the like, including combinations and/or multiples thereof). The laser scanner scans an assembly and obtains data that is used to generate a point cloud representative of the assembly, building, etc. The point cloud is then compared to a model (e.g., a CAD model, a BIM model, etc.) associated with the scanned assembly for defined objects/features. The comparison can reveal absence, presence, and/or mislocation of components of the assembly, based for example on the defined objects/features. For example, deviations between the point cloud and model indicate absences and/or mislocations, while non-deviations indicate presences and correct locations.

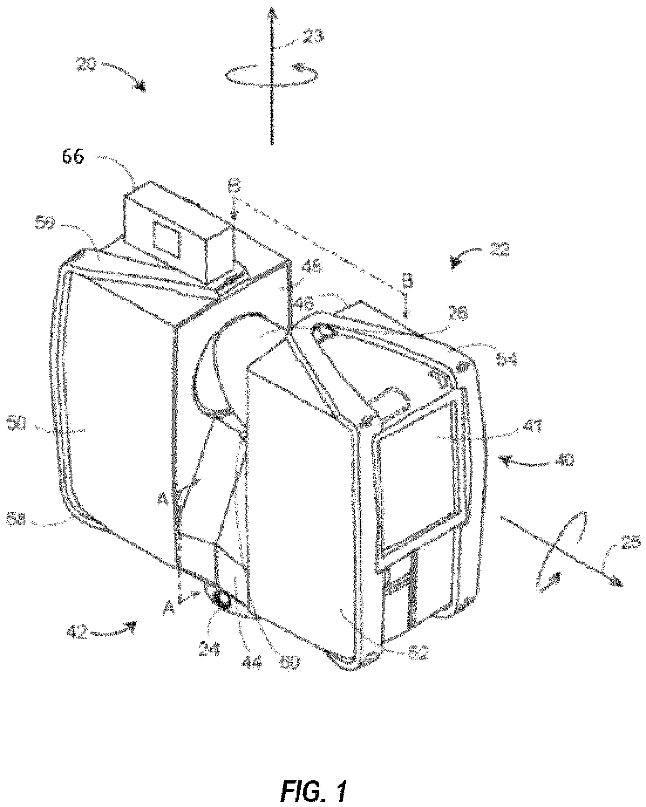

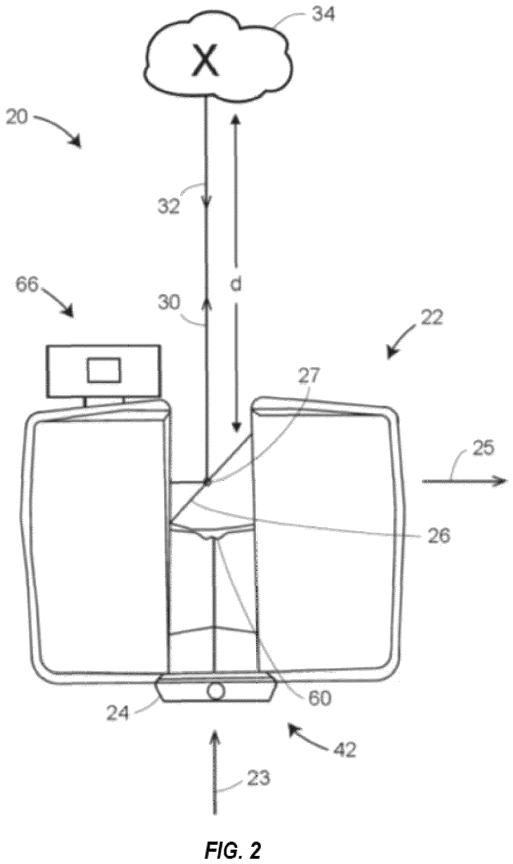

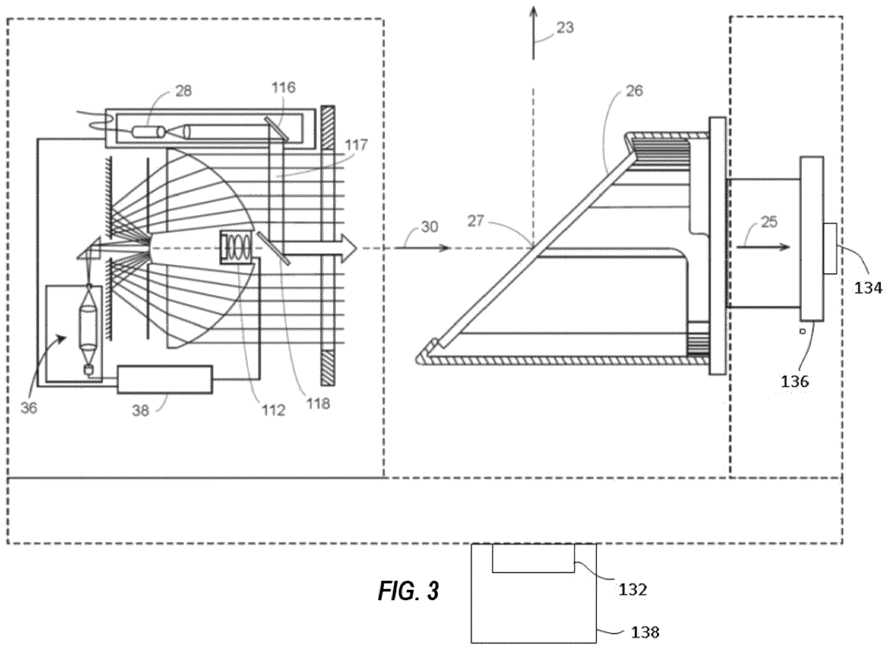

Referring now to FIGS. 1-3, a laser scanner 20 is shown for optically scanning and measuring the environment surrounding the laser scanner 20 according to one or more embodiments described herein. The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms azimuth axis and zenith axis may be substituted for the terms vertical axis and horizontal axis, respectively. The term pan axis or standing axis may also be used as an alternative to vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

Coupled to the light emitter 28 and the light receiver 36 is a controller 38. The controller 38 determines, for a multitude of measuring points X, a corresponding number of distances d between the laser scanner 20 and the points X on object 34. The distance to a particular point X is determined based at least in part on the speed of light in air through which electromagnetic radiation propagates from the device to the object point X. In one embodiment the phase shift of modulation in light emitted by the laser scanner 20 and the point X is determined and evaluated to obtain a measured distance d.

The speed of light in air depends on the properties of the air such as the air temperature, barometric pressure, relative humidity, and concentration of carbon dioxide. Such air properties influence the index of refraction *n* of the air. The speed of light in air is equal to the speed of light in vacuum *c* divided by the index of refraction. In other words, *c*ₐᵢᵣ = *c* / *n.* A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel along a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the scanner 20 may also collect gray-scale information related to the received optical power (equivalent to the term "brightness") The gray-scale value may be determined at least in part, for example, by integration of the bandpass-filtered and amplified signal in the light receiver 36 over a measuring period attributed to the object point X.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, the screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse member 44 having a pair of walls 46, 48 on opposing ends. The walls 46, 48 are parallel to each other and extend in a direction opposite the base 24. Shells 50, 52 are coupled to the walls 46, 48 and cover the components of the laser scanner 20. In the exemplary embodiment, the shells 50, 52 are made from a plastic material, such as polycarbonate or polyethylene for example. The shells 50, 52 cooperate with the walls 46, 48 to form a housing for the laser scanner 20.

On an end of the shells 50, 52 opposite the walls 46, 48 a pair of yokes 54, 56 are arranged to partially cover the respective shells 50, 52. In the exemplary embodiment, the yokes 54, 56 are made from a suitably durable material, such as aluminum for example, that assists in protecting the shells 50, 52 during transport and operation. The yokes 54, 56 each includes a first arm portion 58 that is coupled, such as with a fastener for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48 and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52 and the measuring head 22 from damage during transportation and operation. In other embodiments, the yokes 54, 56 may include additional features, such as handles to facilitate the carrying of the laser scanner 20 or attachment points for accessories for example.

On top of the traverse 44, a prism 60 is provided. The prism extends parallel to the walls 46, 48. In the exemplary embodiment, the prism 60 is integrally formed as part of the carrying structure 42. In other embodiments, the prism 60 is a separate component that is coupled to the traverse 44. When the mirror 26 rotates, during each rotation the mirror 26 directs the emitted light beam 30 onto the traverse 44 and the prism 60. Due to non-linearities in the electronic components, for example in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by the controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an embodiment, the auxiliary image acquisition device 66 is a color camera.

In an embodiment, a central color camera (first image acquisition device) 112 is located internally to the scanner and may have the same optical axis as the 3D scanner device. In this embodiment, the first image acquisition device 112 is integrated into the measuring head 22 and arranged to acquire images along the same optical pathway as emitted light beam 30 and reflected light beam 32. In this embodiment, the light from the light emitter 28 reflects off a fixed mirror 116 and travels to dichroic beam-splitter 118 that reflects the light 117 from the light emitter 28 onto the rotary mirror 26. In an embodiment, the mirror 26 is rotated by a motor 136 and the angular/rotational position of the mirror is measured by angular encoder 134. The dichroic beam-splitter 118 allows light to pass through at wavelengths different than the wavelength of light 117. For example, the light emitter 28 may be a near infrared laser light (for example, light at wavelengths of 780 nm or 1150 nm), with the dichroic beam-splitter 118 configured to reflect the infrared laser light while allowing visible light (e.g., wavelengths of 400 to 700 nm) to transmit through. In other embodiments, the determination of whether the light passes through the beam-splitter 118 or is reflected depends on the polarization of the light. The digital camera 112 obtains 2D images of the scanned area to capture color data to add to the scanned image. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the mirror 26 about the axis 25.

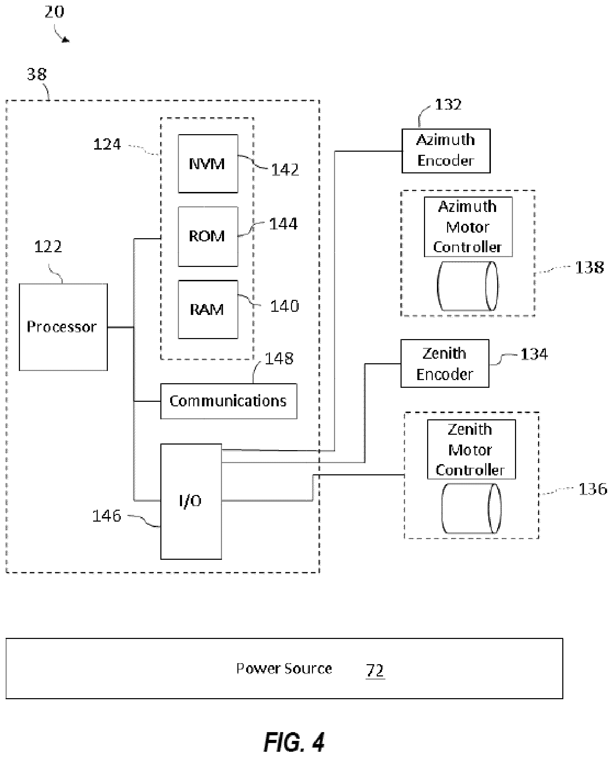

Referring now to FIG. 4 with continuing reference to FIGS. 1-3, elements are shown of the laser scanner 20. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 is capable of converting the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to distance to an object, images of the environment, images acquired by panoramic camera 126, angular/rotational measurements by a first or azimuth encoder 132, and angular/rotational measurements by a second axis or zenith encoder 134.

In general, controller 38 accepts data from encoders 132, 134, light receiver 36, light source 28, and panoramic camera 126 and is given certain instructions for the purpose of generating a 3D point cloud of a scanned environment. Controller 38 provides operating signals to the light source 28, light receiver 36, panoramic camera 126, zenith motor 136 and azimuth motor 138. The controller 38 compares the operational parameters to predetermined variances and if the predetermined variance is exceeded, generates a signal that alerts an operator to a condition. The data received by the controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touch-screen display or the like. A keypad may also be coupled to the user interface for providing data input to controller 38. In one embodiment, the user interface is arranged or executed on a mobile computing device that is coupled for communication, such as via a wired or wireless communications medium (e.g. Ethernet, serial, USB, Bluetooth^{™} or WiFi) for example, to the laser scanner 20.

The controller 38 may also be coupled to external computer networks such as a local area network (LAN) and the Internet. A LAN interconnects one or more remote computers, which are configured to communicate with controller 38 using a well- known computer communications protocol such as TCP/IP (Transmission Control Protocol/Internet(^) Protocol), RS-232, ModBus, and the like. Additional systems 20 may also be connected to LAN with the controllers 38 in each of these systems 20 being configured to send and receive data to and from remote computers and other systems 20. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods embodied in application code (e.g., program instructions executable by a processor to cause the processor to perform operations). These methods are embodied in computer instructions written to be executed by processors 122, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (HyperText Markup Language), Python, Ruby and any combination or derivative of at least one of the foregoing.

It should be appreciated that while embodiments herein refer to the scanner 20 as being a device that acquires a three-dimensional point cloud, this is for example purposes and the claims should not be so limited. In other embodiments, other types of three-dimensional coordinate measurement devices, such as but not limited to a triangulation scanner, a line scanner, or a photogrammetry device for example, may be used.

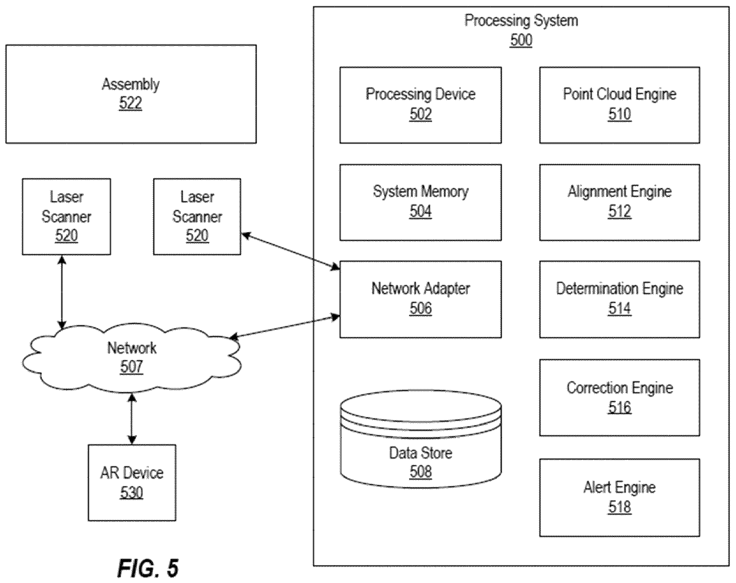

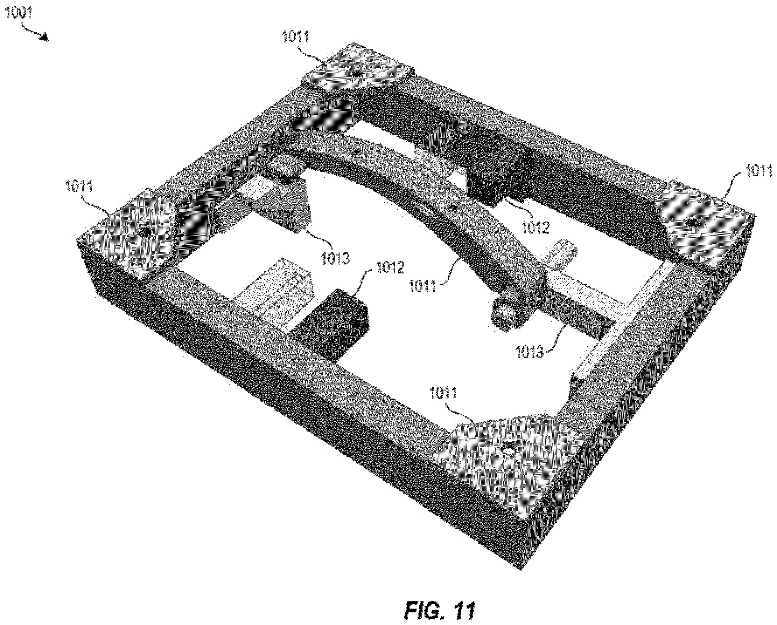

FIG. 5 is a schematic illustration of a processing system 500 for verifying positioning of components of assemblies according to one or more embodiments described herein. The processing system 500 includes a processing device 502 (e.g., one or more of the processing devices 1121 of FIG. 11), a system memory 504 (e.g., the RAM 1124 and/or the ROM 1122 of FIG. 11), a network adapter 506 (e.g., the network adapter 1126 of FIG. 11), a point cloud engine 510, an alignment engine 512, a determination engine 514, a correction engine 516, and an alert engine 518.

The various components, modules, engines, etc. described regarding FIG. 5, such as the point cloud engine 510, the alignment engine 512, the determination engine 514, the correction engine 516, and the alert engine 518, can be implemented as instructions stored on a computer-readable storage medium, as hardware modules, as special-purpose hardware (e.g., application specific hardware, application specific integrated circuits (ASICs), application specific special processors (ASSPs), field programmable gate arrays (FPGAs), as embedded controllers, hardwired circuitry, etc.), or as some combination or combinations of these. According to aspects of the present disclosure, the engine(s) described herein can be a combination of hardware and programming. The programming can be processor executable instructions stored on a tangible memory, and the hardware can include the processing device 502 for executing those instructions. Thus, the system memory 504 can store program instructions that when executed by the processing device 502 implement the engines described herein. Other engines can also be utilized to include other features and functionality described in other examples herein.

The network adapter 506 enables the processing system 500 to transmit data to and/or receive data from other sources, such as laser scanners 520. For example, the processing system 500 receives data (e.g., a data set that includes a plurality of three-dimensional coordinates of an assembly 522) from one or more of the laser scanners 520 directly and/or via a network 507.

The network 507 represents any one or a combination of different types of suitable communications networks such as, for example, cable networks, public networks (e.g., the Internet), private networks, wireless networks, cellular networks, or any other suitable private and/or public networks. Further, the network 507 can have any suitable communication range associated therewith and may include, for example, global networks (e.g., the Internet), metropolitan area networks (MANs), wide area networks (WANs), local area networks (LANs), or personal area networks (PANs). In addition, the network 507 can include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof.

One or more laser scanners 520 (e.g., the laser scanner 20) can be arranged on or around the assembly 522 to scan the assembly. According to one or more embodiments described herein, the laser scanners 520 can include a scanner processing system including a scanner controller, a housing, and a three-dimensional (3D) scanner. The 3D scanner can be disposed within the housing and operably coupled to the scanner processing system. The 3D scanner includes a light source, a beam steering unit, a first angle measuring device, a second angle measuring device, and a light receiver. The beam steering unit cooperates with the light source and the light receiver to define a scan area. The light source and the light receiver are configured to cooperate with the scanner processing system to determine a first distance to a first object point based at least in part on a transmitting of a light by the light source and a receiving of a reflected light by the light receiver. The 3D scanner is further configured to cooperate with the scanner processing system to determine 3D coordinates of the first object point based at least in part on the first distance, a first angle of rotation, and a second angle of rotation.

The laser scanners 520 perform at least one scan to generate a data set that includes a plurality of three-dimensional coordinates of the assembly. The data set can be transmitted, directly or indirectly (such as via a network) to a processing system, such as the processing system 500. It should be appreciated that other numbers of scanners (e.g., one scanner, three scanners, four scanners, six scanners, eight scanners, etc.) can be used. According to one or more embodiments described herein, one or more scanners can be used to take multiple scans. For example, one of the scanners 520 can capture first scan data at a first location and then be moved to a second location, where the one of the scanners 520 captures second scan data.

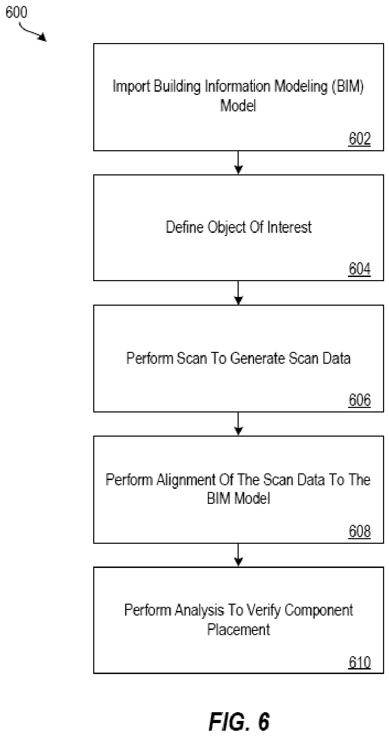

Using the data received from the laser scanners 520, the processing system 500 can verify positioning of components of assemblies. The features and functionality of the point cloud engine 510, the alignment engine 512, the determination engine 514, the correction engine 516, and the alert engine 518 are now described in more detail with reference to the methods depicted in FIGS. 6, 7, and 9.

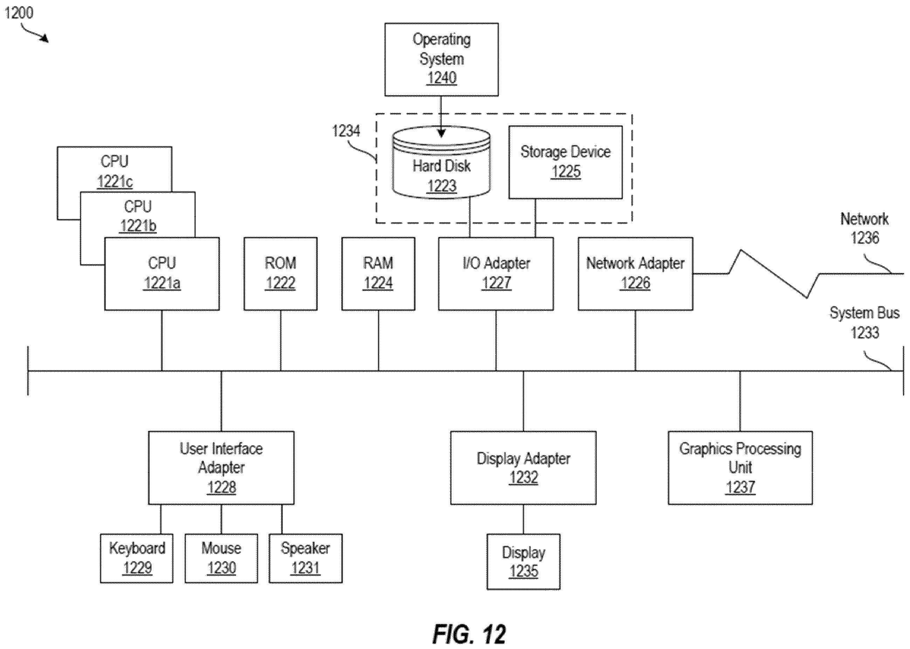

FIG. 6 is a flow diagram of a method 600 for verifying positioning of components of assemblies according to one or more embodiments described herein. The method 600 can be performed by any suitable system or device, such as the processing system 500 of FIG. 5 and/or the processing system 1200 of FIG. 12.

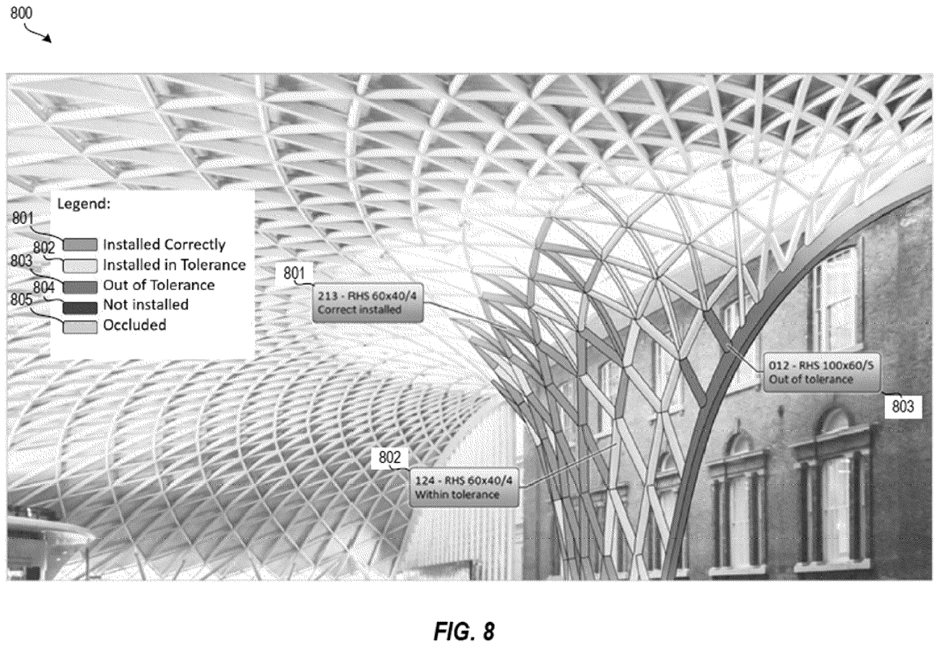

At block 602, the processing system 500 imports a BIM model of an assembly. In this example, the assembly could be a portion of a building structure, as shown in FIG. 8. It particular, FIG. 8 depicts is a graphical representation 800 of an assembly according to one or more embodiments described herein. In this example, the assembly is a portion of a building, and the assembly includes various components, such as beams/supports, walls, HVAC ducts, water/drain/exhaust pipes, etc.

With continued reference to FIG. 6, at block 604, the processing system 500 defines one or more objects of interest from the BIM model of the assembly. For example, a user can select one or more objects of interest from the BIM model of the assembly. Referring to the example assembly of FIG. 8, the objects of interest could be the beams/supports that make up a frame of the building shown as the assembly. In some examples, the one or more objects of interest can be automatically determined by the processing system 500, such as using machine learning techniques. For example, a machine learning model can be trained to detect one or more types of objects, and the machine learning model can be used to identify objects of interest from an image of an assembly based on the training. As one such example, a machine learning model can be trained to recognize fasteners. An image of an assembly can be analyzed using the trained machine learning model to identify fasteners, and the identified fasteners are the objects of interest.

At block 606, the laser scanner 520 (e.g., the scanner 20) performs a scan, as described herein, of the assembly to generate scan data. For example, the laser scanner 520 generates a data set that includes a plurality of three-dimensional (3D) coordinates of the assembly. In examples, the data set can be a 3D mesh or point cloud representation of the scanned floor. The data set is transferred to a processing system (e.g., the processing system 500) as described herein. The processing system 500 receives the scan data and uses the scan data to generate, using the point cloud engine 510, a point cloud. According to one or more embodiments described herein, one or more scanners can be used to take multiple scans, and the data from the multiple scans can be combined to form the point cloud. For example, one of the scanners 520 can capture first scan data at a first location and then be moved to a second location, where the one of the scanners 520 captures second scan data. As another example, one of the scanners 520 can capture first scan data at a first location and another of the scanners 520 can capture second scan data at a second location. In this way, the assembly is scanned.

At block 608, the processing system 500, using the alignment engine 512, aligns the scan data (e.g., point cloud) with the BIM model. Alignment is the processing of matching points of the point cloud with points of the model. Alignment can be performed manually, semi-automatically, or automatically. For example, the scan data is acquired and saved with respect to a first coordinate system, and the model is defined with respect to a second coordinate system different than the first coordinate system. Alignment brings together the scan data and model into a shared coordinate system. In one example, a user can select one or more points in the point cloud and select corresponding points in the model. This causes the point cloud to be aligned to the model. In some examples, statistical techniques, such as iterative closest point, can be applied to refine the results of the alignment. In another example, an automated alignment technique can be used, which includes preprocessing the scan data and the model to convert points into a suitable representation for 3D registration. Then, 3D registration estimates the transformation parameter to points from the scan data to points from the model. This can be done using a course registration (e.g., using principal component analysis to estimate the transformation parameter) and a fine registration (e.g., using iterative closest point). Other alignment approaches can also be used.

At block 610, the processing system 500, using the determination engine 514, performs an analysis to verify component placement using the point cloud aligned to the model. This can include, for example, determining whether the component is present in the assembly and/or determining whether the component is at a correct location within the assembly (e.g., within some tolerance of an anticipated location as defined in the model). For example, the processing system 500 determines whether a component corresponding to the object of interest is located correctly relative to the assembly based at least in part on the point cloud aligned to the model. As an example, the determination engine 514 calculates a distance between a point of the point cloud associated with the component and a known location of a point of the model corresponding to the assembly. That is, the point cloud has, for each point, a set of coordinates. The model also has known locations, which can be expressed as coordinates, for each point on the assembly. The distance between two corresponding points (e.g., a point of the model and a point from the point cloud) can be computed. This distance is then compared, by the determination engine 514, to a threshold. If the distance satisfies the threshold (e.g., the distance is less than the threshold), the component is said to be correctly located. However, if the distance does not satisfy the threshold (e.g., the distance is greater than the threshold), the component is said to be mislocated and/or absent. It should be appreciated that the threshold can be adjusted, such as by a user and/or automatically, on a case-by-case basis.

Additional processes also may be included. For example, if it is determined that the component is not correctly located, a corrective action can be taken and/or an alert can be generated. As an example of a corrective action, the processing system 500, using the correction engine 516, can cause a system (e.g., a robotic system) to add a component determined to be absent/missing, to move a component determined to be mislocated, etc. As an example of an alert, the processing system 500, using the alert engine 518, can issue a visual and/or audible alert to a user. One such use case is to generate an augmented reality element on an augmented reality device, which is described further herein, showing the absent or mislocated component. In an example, the alert engine 518 generates a graphical representation, such as a graphical representation of the model and/or a graphical representation of the model and the point cloud. FIG. 8 depicts an example of a graphical representation 800. As shown in FIG. 8, the graphical representation 800 can include an indicium positioning information for the object of interest relative to the assembly. For example, the indicium can indicate whether the component is present in the assembly, whether the component is at a correct location, whether the component is in or out of tolerance relative to a threshold, whether the component is missing, whether a component/area is occluded in the scan data, whether there is not enough data to make a determination, etc. Referring to FIG. 8, the graphical representation 800 includes the following indicia: installed correctly 801, installed in tolerance 802, out of tolerance 803, not installed 804, and occluded 805.

It should be understood that the process depicted in FIG. 6 represents an illustration, and that other processes may be added or existing processes may be removed, modified, or rearranged without departing from the scope of the present disclosure.

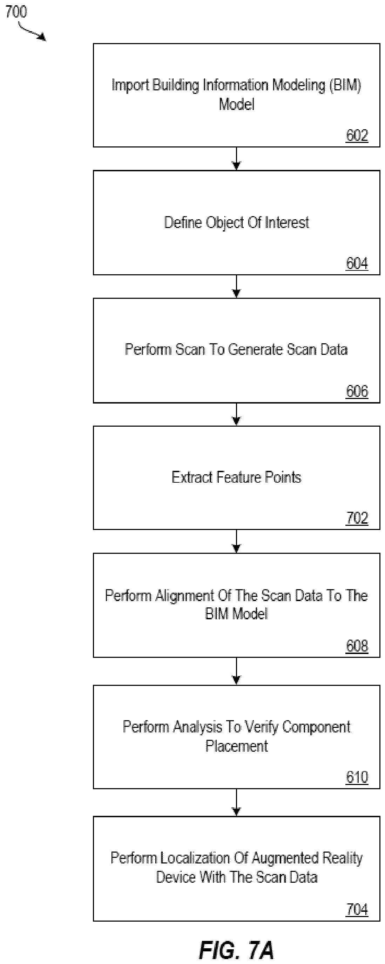

FIG. 7A depicts a flow diagram of a method 700 for verifying positioning of components of assemblies according to one or more embodiments described herein. The method 600 can be performed by any suitable system or device, such as the processing system 500 of FIG. 5 and/or the processing system 1200 of FIG. 12.

The method 700 is similar to the method 600 in that it includes importing a BIM model (block 602), defining objects (block 604), performing a scan to generate scan data (block 606), performing alignment of the scan to the BIM model (block 608), and performing an analysis to verify component placement (block 610).

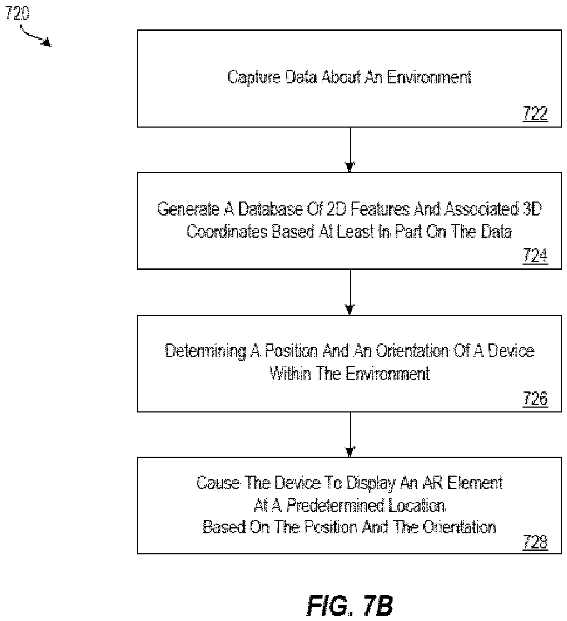

In addition, the method 700 further includes the processing system 500 extracting feature points at block 702 and performing localization of an augmented reality device with the scan data at block 704. Commonly owned provisional application no. 63/215,126, which is incorporated by reference herein in its entirety, provides examples of techniques for performing initialization and tracking. An example of a method 720 of such an approach is shown in FIG. 7B.

At block 722, data about an assembly is captured (e.g., the scan data). As one example, a camera (not shown) associated with the scanner 520 captures images about the assembly 522 and transmits the images to the processing system 500. In some examples, the camera can perform pre-processing (e.g., encryption, compression, feature recognition, etc.) on the images before transmitting the images to the processing system 500. As another example, the scanner 520 scans the assembly and captures 3D data about the assembly 522 in the form of a point cloud. An example of such a scanner is shown and described herein with reference to FIGS. 1-4 as described herein. The processing system 500 stores the data about the assembly in data store 508, for example.

At block 724, the processing system 500 performs an initialization, which includes generating a database of 2D features and associated 3D coordinates based at least in part on the data about the assembly 522. That is, the processing system 500 extracts feature points (see block 702 of FIG. 7A). The processing system 500 stores the database of 2D features and associated 3D coordinates as data in data store 508.

During the initialization, the processing system 500 uses the data captured about the assembly 522. To do this, the processing system 500 extracts 2D features and descriptors using 2D images and estimates 3D coordinates for the 2D features. A scene of the assembly can be pre-scanned by taking 2D images, which can be frame array or spherical images. The processing system 500 performs feature extraction on these images and matches the features together from different images. Matching the features includes recognizing a feature in multiple images and then estimating the 3D coordinates of that feature, such as using photogrammetry or laser scanning. In order to do the feature matching, descriptors are defined for the extracted features. In practice, any feature descriptor definition can be associated to the extracted features.

Photogrammetry is a technique for measuring objects using images, such as photographic images acquired by a digital camera for example. Photogrammetry can make 3D measurements from 2D images or photographs. When two or more images are acquired at different positions that have an overlapping field of view, common points or features may be identified on each image. By projecting a ray from the camera location to the feature/point on the object, the 3D coordinate of the feature/point may be determined using trigonometry or triangulation. In some examples, photogrammetry may be based on markers/targets (e.g., lights or reflective stickers) or based on natural features. To perform photogrammetry, for example, images are captured, such as with a camera having a sensor, such as a photosensitive array for example. By acquiring multiple images of an object, or a portion of the object, from different positions or orientations, 3D coordinates of points on the object may be determined based on common features or points and information on the position and orientation of the camera when each image was acquired. In order to obtain the desired information for determining 3D coordinates, the features are identified in two or more images. Since the images are acquired from different positions or orientations, the common features are located in overlapping areas of the field of view of the images. It should be appreciated that photogrammetry techniques are described in commonly-owned U.S. Patent 10,597,753, the contents of which are incorporated by reference herein. With photogrammetry, two or more images are captured and used to determine 3D coordinates of features.

Laser scanning is a technique for measuring objects using laser light beams projected onto the objects. Laser scanning generates a 3D point cloud of the object. FIGS. 1-4 depict a laser scanner 20 and further describe the technique of laser scanning. With laser scanning, a laser color panorama image can be created by stitching internal images together. The laser color panorama image is used in addition to the point cloud. The laser color panorama image is aligned to a coordinate system of the laser scanned point cloud. Therefore, the 3D coordinates of the features can be estimated directly by casting a ray in 3D space and performing a bilinear (or other suitable) interpolation technique.

In one or more examples, it is possible to combine photogrammetry and laser scanning. In this way, feature extraction is performed in images (e.g., frame or spherical) using color or laser intensity (optical power of the returned light beam). The 3D coordinates of the features are determined first from the laser scan point cloud and, for those features with no 3D coordinates, photogrammetry is used to determining the 3D coordinates for those features. In some examples, feature extraction is based at least in part on an intensity image (e.g., a grayscale image generated from the optical power of the returned light beam), a color image, or light detection and ranging (lidar) depth data (e.g. an RGB-D camera). The intensity image is an image represented as a data matrix whose values represent optical intensities. The color image is an image with color values. The lidar depth data indicates a distance value for a detected object relative to a lidar sensor. For example, the camera can include a lidar sensor.

Once the initialization is performed, tracking can be performed using results of the initialization. For example, with continued reference to FIG. 7B, at block 726, the processing system 500 performs tracking using the data stored in the data store 508. Tracking involves determining a position and an orientation of a device, such as an augmented reality (AR) device 530 (e.g., a smart phone, a tablet computer, a head-up display, etc.), within an environment. As used herein, the term "position" refers to a particular location of an object (e.g., the AR device 530) in a 3D coordinate system, which can be expressed for example using the coordinates (x, y, z) where "x" represents an x-axis coordinate, "y" represents a y-axis coordinate, and "z" represents a z-axis coordinate. The term "orientation" refers to how the object (e.g., the AR device 530) is positioned within the 3D coordinate system, which can be expressed for example using roll, pitch, and yaw. Together, the position and orientation define a location with six-degrees of freedom. Performing tracking can be accomplished by the processing system 500 performing a comparison between an image captured by the user device and the data (e.g., a database of 2D features and associated 3D coordinates). The tracking is performed (e.g., localization of the AR device 530 with the scan data is performed at block 704 of FIG. 7A). Tracking can include extracting 2D features of an image, then, for each 2D feature, identifying a match in the database of 2D features and associated 3D coordinates. For matches, a 3D reference point is created for tracking by using the 3D coordinates stored in the database of 2D features and associated 3D coordinates, and a relative orientation and/or space restriction using the 3D reference point are used to track the AR device 530 in the environment.

Additional processes also may be included, and it should be understood that the processes depicted in FIGS. 7A and 7B represent illustrations, and that other processes may be added or existing processes may be removed, modified, or rearranged without departing from the scope of the present disclosure.

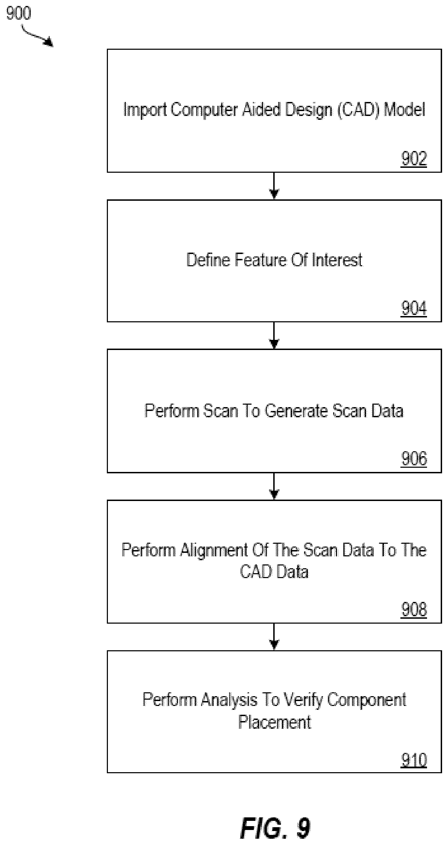

FIG. 9 depicts a flow diagram of a method 900 for verifying positioning of components of assemblies according to one or more embodiments described herein. The method 600 can be performed by any suitable system or device, such as the processing system 500 of FIG. 5 and/or the processing system 1200 of FIG. 12.

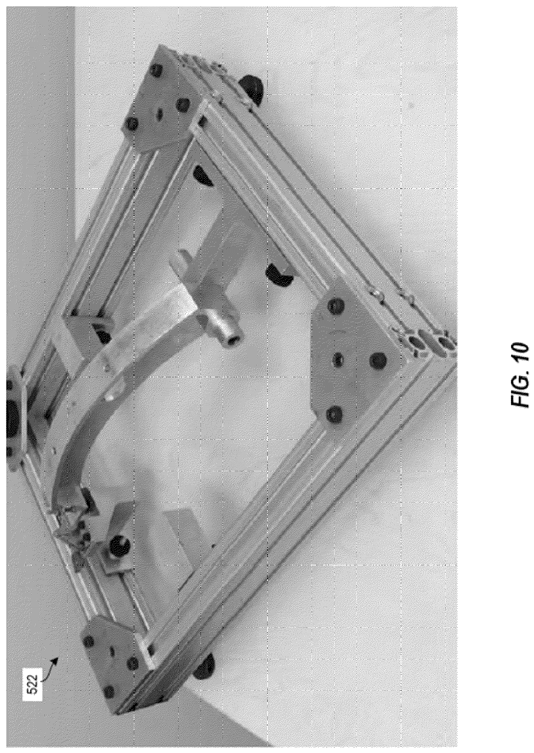

At block 902, the processing system 500 imports a CAD model of an assembly. In this example, the assembly could be the assembly 522 shown in FIG. 10 or another suitable assembly. In this example, the assembly is a roof truss assembly for a building, and the assembly includes various components, such as supports, cross members, eyelets, etc.

With continued reference to FIG. 9, at block 904, the processing system 500 defines one or more features of interest from the CAD model of the assembly. For example, a user can select one or more features of interest from the CAD model of the assembly. Features of interest can include, but are not limited to, one or more of components, brackets, sub-assemblies, or the like. Referring to the example assembly 522 of FIG. 10, the features of interest could be the supports that make up the frame of the roof truss assembly shown as the assembly 522. In some examples, the one or more features of interest can be automatically determined by the processing system 500, such as using machine learning techniques. For example, a machine learning model can be trained to detect one or more types of features, and the machine learning model can be used to identify features of interest from an image of an assembly based on the training. As one such example, a machine learning model can be trained to recognize fasteners. An image of an assembly can be analyzed using the trained machine learning model to identify fasteners, and the identified fasteners are the features of interest.

At block 906, a 3D coordinate measurement device, such as the laser scanner 520 (e.g., the scanner 20) or any other suitable device such as a smartphone having a lidar sensor, performs a scan, as described herein, of the assembly to generate scan data. For example, the laser scanner 520 generates a data set that includes a plurality of three-dimensional (3D) coordinates of the assembly. In examples, the data set can be a 3D mesh or point cloud representation of the scanned floor. It should be appreciated that any suitable source can be used to generate the data set, such as the laser scanner 20 of FIG. 1, a processing system equipped with a suitable sensor for acquiring 3D coordinates (e.g., a lidar sensor, etc.), and the like. The data set is transferred to a processing system (e.g., the processing system 500) as described herein. The processing system 500 receives the scan data and uses the scan data to generate, using the point cloud engine 510, a point cloud. According to one or more embodiments described herein, one or more scanners can be used to take multiple scans, and the data from the multiple scans can be combined to form the point cloud. For example, one of the scanners 520 can capture first scan data at a first location and then be moved to a second location, where the one of the scanners 520 captures second scan data. As another example, one of the scanners 520 can capture first scan data at a first location and another of the scanners 520 can capture second scan data at a second location. In this way, the assembly is scanned.

At block 908, the processing system 500, using the alignment engine 512, aligns the scan data (e.g., point cloud) with the CAD model. Alignment is the processing of matching points of the point cloud with points of the model. Alignment can be performed manually, semi-automatically, or automatically. For example, the scan data is acquired and saved with respect to a first coordinate system, and the model is defined with respect to a second coordinate system different than the first coordinate system. Alignment brings together the scan data and model into a shared coordinate system. In one example, a user can select one or more points in the point cloud and select corresponding points in the model. This causes the point cloud to be aligned to the model. In some examples, statistical techniques, such as iterative closest point, can be applied to refine the results of the alignment. In another example, an automated alignment technique can be used, which includes preprocessing the scan data and the model to convert points into a suitable representation for 3D registration. Then, 3D registration estimates the transformation parameter to points from the scan data to points from the model. This can be done using a course registration (e.g., using principal component analysis to estimate the transformation parameter) and a fine registration (e.g., using iterative closest point). Other alignment approaches can also be used.

At block 910, the processing system 500, using the determination engine 514, performs an analysis to verify component placement using the point cloud aligned to the model. This can include, for example, determining whether the component is present in the assembly and/or determining whether the component is at a correct location within the assembly (e.g., within some tolerance of an anticipated location as defined in the model). For example, the processing system 500 determines whether a component corresponding to the feature of interest is located correctly relative to the assembly based at least in part on the point cloud aligned to the model. As an example, the determination engine 514 calculates a distance between a point of the point cloud associated with the component and a known location of a point of the model corresponding to the assembly. That is, the point cloud has, for each point, a set of coordinates. The model also has known locations, which can be expressed as coordinates, for each point on the assembly. The distance between two corresponding points (e.g., a point of the model and a point from the point cloud) can be computed. This distance is then compared, by the determination engine 514, to a threshold. If the distance satisfies the threshold (e.g., the distance is less than the threshold), the component is said to be correctly located. However, if the distance does not satisfy the threshold (e.g., the distance is greater than the threshold), the component is said to be mislocated and/or absent. It should be appreciated that the threshold can be adjusted, such as by a user and/or automatically, on a case-by-case basis.

Additional processes also may be included. For example, if it is determined that the component is not correctly located, a corrective action can be taken and/or an alert can be generated. As an example of a corrective action, the processing system 500, using the correction engine 516, can cause a system (e.g., a robotic system) to add a component determined to be absent/missing, to move a component determined to be mislocated, etc. As an example of an alert, the processing system 500, using the alert engine 518, can issue a visual and/or audible alert to a user. One such use case is to generate an augmented reality element on an augmented reality device, which is described further herein, showing the absent or mislocated component. In an example, the alert engine 518 generates a graphical representation, such as a graphical representation of the model and/or a graphical representation of the model and the point cloud. FIG. 11 depicts an example of a graphical representation 1001 of the assembly 522 of FIG. 10. As shown in FIG. 11, the graphical representation 1001 can include an indicium of positioning information for the object of interest relative to the assembly. In this case, the green color (see, e.g., top plates and rib component 1011) represents features that are within a tolerance (e.g., installed correctly), while the red color (see, e.g., components 1012) indicates features that are out of tolerance (e.g., installed incorrectly). The yellow color (see, e.g., brackets 1013) indicates features that are within tolerance but are nearing (e.g., within some percentage) of the tolerance. For example, the indicium can indicate whether the component is present in the assembly, whether the component is at a correct location, whether the component is in or out of tolerance relative to a threshold, whether the component is missing, whether a component/area is occluded in the scan data, whether there is not enough data to make a determination, etc. Referring to FIG. 11, the graphical representation 1001 shows that the component 1020 is mislocated, as shown by the indicator 1022). Particularly, the component 1020 is shown at its real-world location based on the scan data, while the desired location 1021 for the component 1020 is also shown on the graphical representation 1001.

Additional processes also may be included, and it should be understood that the process depicted in FIG. 9 represents an illustration, and that other processes may be added or existing processes may be removed, modified, or rearranged without departing from the scope of the present disclosure.

It is understood that one or more embodiments described herein is capable of being implemented in conjunction with any other type of computing environment now known or later developed. For example, FIG. 12 depicts a block diagram of a processing system 1200 for implementing the techniques described herein. In accordance with one or more embodiments described herein, the processing system 1200 is an example of a cloud computing node of a cloud computing environment. In examples, processing system 1200 has one or more central processing units ("processors" or "processing resources" or "processing devices") 1221a, 1221b, 1221c, etc. (collectively or generically referred to as processor(s) 1221 and/or as processing device(s)). In aspects of the present disclosure, each processor 1221 can include a reduced instruction set computer (RISC) microprocessor. Processors 1221 are coupled to system memory (e.g., random access memory (RAM) 1224) and various other components via a system bus 1233. Read only memory (ROM) 1222 is coupled to system bus 1233 and may include a basic input/output system (BIOS), which controls certain basic functions of processing system 1200.

Further depicted are an input/output (I/O) adapter 1227 and a network adapter 1226 coupled to system bus 1233. I/O adapter 1227 may be a small computer system interface (SCSI) adapter that communicates with a hard disk 1223 and/or a storage device 1225 or any other similar component. I/O adapter 1227, hard disk 1223, and storage device 1225 are collectively referred to herein as mass storage 1234. Operating system 1240 for execution on processing system 1200 may be stored in mass storage 1234. The network adapter 1226 interconnects system bus 1233 with an outside network 1236 enabling processing system 1200 to communicate with other such systems.

A display (e.g., a display monitor) 1235 is connected to system bus 1233 by display adapter 1232, which may include a graphics adapter to improve the performance of graphics intensive applications and a video controller. In one aspect of the present disclosure, adapters 1226, 1227, and/or 1232 may be connected to one or more I/O busses that are connected to system bus 1233 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 1233 via user interface adapter 1228 and display adapter 1232. A keyboard 1229, mouse 1230, and speaker 1231 may be interconnected to system bus 1233 via user interface adapter 1228, which may include, for example, a Super I/O chip integrating multiple device adapters into a single integrated circuit.

In some aspects of the present disclosure, processing system 1200 includes a graphics processing unit 1237. Graphics processing unit 1237 is a specialized electronic circuit designed to manipulate and alter memory to accelerate the creation of images in a frame buffer intended for output to a display. In general, graphics processing unit 1237 is very efficient at manipulating computer graphics and image processing, and has a highly parallel structure that makes it more effective than general-purpose CPUs for algorithms where processing of large blocks of data is done in parallel.

Thus, as configured herein, processing system 1200 includes processing capability in the form of processors 1221, storage capability including system memory (e.g., RAM 1224), and mass storage 1234, input means such as keyboard 1229 and mouse 1230, and output capability including speaker 1231 and display 1235. In some aspects of the present disclosure, a portion of system memory (e.g., RAM 1224) and mass storage 1234 collectively store the operating system 1240 to coordinate the functions of the various components shown in processing system 1200.

It will be appreciated that one or more embodiments described herein may be embodied as a system, method, or computer program product and may take the form of a hardware embodiment, a software embodiment (including firmware, resident software, micro-code, etc.), or a combination thereof. Furthermore, one or more embodiments described herein may take the form of a computer program product embodied in one or more computer readable medium(s) having computer readable program code embodied thereon.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A method comprising:
receiving a model corresponding to an assembly;
defining an object of interest in the model;
receiving a point cloud generated based on data obtained by scanning the assembly using a three-dimensional (3D) coordinate measurement device;
aligning the point cloud to the model;
determining whether a component corresponding to the object of interest is located correctly relative to the assembly based at least in part on the point cloud aligned to the model; and
responsive to determining that the component is not located correctly, taking a corrective action.

2. The method of claim 1, wherein determining whether the component corresponding to the object of interest is located correctly relative to the assembly comprises determining whether the component is present in the assembly.

3. The method of claim 2, further comprising, responsive to determining that the component is present in the assembly, determining whether the component is at a correct location of the assembly.

4. The method of claim 1, further comprising generating a graphical representation of the model.

5. The method of claim 4, wherein the graphical representation includes an indicium indicating positioning information for the object of interest relative to the assembly.

6. The method of claim 5, wherein the indicium indicates whether the component is present in the assembly or is at a correct location of the assembly.

7. The method of claim 1, wherein determining whether the component is located correctly relative to the assembly comprises comparing a distance to a threshold, the distance being the distance between a point of the point cloud associated with the component and a known location of a point of the model corresponding to the assembly.

8. The method of claim 1, wherein the model is a computer aided design model or is a building information modeling (BIM) model.

9. The method of claim 1, further comprising:
extracting feature points from the scan data to generate a feature point database; and
performing a localization of an augmented reality device using the feature point database.

10. A system comprising:
a laser scanner to perform at least one scan and generate a data set that includes a plurality of three-dimensional coordinates; and
a processing system comprising:
a memory comprising computer readable instructions; and
a processing device for executing the computer readable instructions, the computer readable instructions controlling the processing device to perform operations comprising:
receiving a model corresponding to an assembly;
defining an object of interest in the model;
receiving a point cloud generated based on data obtained by scanning the assembly using the laser scanner;
aligning the point cloud to the model;
determining whether a component corresponding to the object of interest is located correctly relative to the assembly based at least in part on the point cloud aligned to the model; and
responsive to determining that the component is not located correctly, taking a corrective action.

11. The system of claim 10, wherein determining whether the component corresponding to the object of interest is located correctly relative to the assembly comprises determining whether the component is present in the assembly.

12. The system of claim 11, wherein the instructions further comprise, responsive to determining that the component is present in the assembly, determining whether the component is at a correct location of the assembly.

13. The system of claim 10, wherein the operations further comprise generating a graphical representation of the model.

14. The system of claim 13, wherein the graphical representation includes an indicium indicating positioning information for the object of interest relative to the assembly and the indicium either indicates whether the component is present in the assembly or whether the component is at a correct location of the assembly.

15. The system of claim 14, wherein determining whether the component is located correctly relative to the assembly comprises comparing a distance to an adjustable threshold, the distance being the distance between a point of the point cloud associated with the component and a known location of a point of the model corresponding to the assembly.
